# EUROPÄISCHE PATENTANMELDUNG

(11) **EP 4 553 770 A1**
(43) Veröffentlichungstag der Anmeldung: **14.05.2025**
(21) Anmeldenummer: 24208574.4
(22) Anmeldetag: 24.10.2024
(51) Int. Cl.: G06T 7/73, G06T 7/12, G06T 7/215

(54) **KAMERABASIERTES SYSTEM UND VERFAHREN ZUM BESTIMMEN DER POSITION EINES ANHÄNGERS**

(30) Priorität: 10.11.2023 DE 102023131347
(71) Anmelder: MEKRA Lang GmbH & Co. KG, 91465 Ergersheim (DE)
(72) Erfinder: Bauer, Christian, 91468 Gutenstetten (DE); Fauth, Kai, 97276 Margetshöchheim (DE); Kersten, Christian, 90766 Fürth (DE); Köhler, André, 90469 Nürnberg (DE); Richter, Thomas, 90542 Eckental (DE); Schade, Anne, 97076 Würzburg (DE)
(74) Vertreter: Alpspitz IP

(57) **Zusammenfassung**

Ein Verfahren und ein kamerabasiertes System zum Bestimmen der Position eines Anhängerendes eines sich von einer Zugeinheit (4) eines Fahrzeugs nach hinten erstreckenden schwenkbaren Anhängers (5) durch Verarbeiten von zeitlich aufeinander folgenden Kamerabildern (6), wobei das von dem kamerabasiertes System durchführbare Verfahren folgende Schritte aufweist: Erfassen der zeitlich aufeinanderfolgenden Kamerabilder (6) durch einen Bildsensor von mindestens einer Bildaufnahmevorrichtung (2) des kamerabasiertes Systems; Bestimmen einer Mehrzahl von Featurepunkten (8) in jedem der Kamerabilder (6) basierend auf mindestens einem Bildparameter, wobei ein Featurepunkt (8) mindestens einem Pixel in dem Kamerabild (6) entspricht; Auswählen von prominenten Featurepunkten aus der Mehrzahl von Featurepunkten (8) entlang einer durch die Dichte und Lage der Featurepunkte (8) bestimmten Vorzugsrichtung als Pfadelemente (10) basierend auf einer Positionsverschiebung (dx, dy) zwischen der Mehrzahl von Featurepunkten (8) in einem Kamerabild (6) und einer entsprechenden Mehrzahl von Featurepunkten (8) in einem zeitlich nachfolgenden Kamerabild (6); Erzeugen von mindestens einem den Anhänger (5) beschreibenden Wegpfad (11) entlang der Vorzugsrichtung basierend auf den Pfadelementen (10); und Bestimmen einer Position auf dem Wegpfad (11) als das Anhängerende.

## Beschreibung

Die Erfindung betrifft ein kamerabasiertes System (Sichtsystem bzw. Spiegelersatzsystem) und ein Verfahren zum Bestimmen der Position eines Endes eines sich von einem Fahrzeug nach hinten erstreckenden schwenkbaren Anhängers, insbesondere geeignet für ein Nutzfahrzeug mit Auflieger, Trailer, Anhänger oder einem anderen zur Fahrerkabine bzw. der Zugmaschine schwenkbaren, sich nach hinten erstreckenden Abschnitt.

Der Fahrer eines Fahrzeugs, das eine Zugmaschine bzw. Zugeinheit mit einem sich nach hinten erstreckenden schwenkbaren Anhänger aufweist, beobachtet üblicherweise den rückwärtigen Verkehr mit Hilfe eines an der Zugeinheit seitlich angebrachten Seitenspiegels. Diese Seitenspiegel werden im zunehmenden Maße durch Kamerasysteme, wie Kameramonitorsystem bzw. Spiegelersatzsysteme ersetzt oder wenigstens ergänzt, die seitlich oder am hinteren Teil des Fahrzeugs verbaut sind. Dabei werden herkömmliche Spiegelsysteme ersetzt oder ergänzt, die für ein Kraftfahrzeug vorgeschrieben sind, wie beispielsweise Außenspiegel (Hauptspiegel), Innenspiegel an PKWs oder Weitwinkelspiegel und Frontspiegel an Nutzfahrzeugen.

Bei den oben genannten Systemen wird beispielsweise dem Fahrer des Fahrzeugs das entsprechende Sichtfeld, das herkömmlicherweise durch einen Spiegel einsehbar gemacht wird, mitunter dauerhaft und in Echtzeit auf einem Monitor oder einer anderen Wiedergabeeinheit beispielsweise im Innenraum des Fahrzeugs angezeigt, so dass der Fahrer des Fahrzeugs jederzeit Einsicht in das entsprechende Sichtfeld nehmen kann, obwohl er weder direkte Sicht in das entsprechende Sichtfeld hat noch ein Spiegel vorgesehen ist.

Ein Anhänger im Sinne der vorliegenden Lehre umfasst Anhänger, die mittels Anhängerkupplung an ein Fahrzeug (Zugmaschine bzw. Zugeinheit) gekoppelt werden, beispielsweise Auflieger (sogenannte Trailer), die auf den hinteren, abgesenkten Bereich einer Zugmaschine aufgelegt und damit schwenkbar, um zumindest eine vertikale Achse, verbunden werden. Alternativ können solche Anhänger auch an Pkws angebrachte Anhänger sein, wobei in diesem Fall der Pkw der Zugmaschine entspricht. In allgemeinen Worten ist ein Anhänger ein sich nach hinten erstreckender Abschnitt, der sich rückwärtig zur Fahrerkabine eines Fahrzeugs befindet und ein seitlich relativ zur Fahrerkabine beweglicher (ausschwenkbarer) Fahrzeugteil ist, der bei einer Kurvenfahrt relativ zur Fahrerkabine um eine vertikale Achse schwenkt. Auch Knicklenker oder Gliederzüge sind Anhänger im Sinne der Erfindung.

Bei Verwendung eines oben genannten Spiegelersatzsystems wird jedoch bei einer Kurvenfahrt eines Fahrzeugs mit Zugeinheit und Anhänger der rückwärtige Verkehr im Bild eines Spiegelersatzsystems für z.B. die Sichtfeldklasse II nach ECE R46 mit zunehmenden Knickwinkel zwischen Zugeinheit und Anhänger zunehmend verdeckt. Ferner geht das hintere Teil des Anhängers in der Nähe der Hinterachse verloren, wodurch das Ende des Anhängers aus einem dem Fahrer angezeigten Monitorbild verschwinden kann.

Um dieses Problem zu lösen, gibt es bereits Verfahren zum Verfolgen der Endkante des Anhängers und zum Verschieben des auf einem Monitor angezeigten Bildausschnittes derart, dass die Anhängerendkante mittig im Monitorbild angezeigt wird, soweit dies möglich ist. Gemäß der EP 16 198 485 erfolgt diese Nachverfolgung der Anhängerendkante aktuell beispielsweise mittels Radsensoren, die insbesondere Information über eine Drehbewegung der Räder erfassen. Diese Information wird von einer Steuereinheit ausgewertet, um basierend auf der erfassten Information über die Drehbewegung der Räder den Heckbereich des sich nach hinten erstreckenden Abschnitts zu bestimmen und geeignet nachzuführen. Da diese Sensoren jedoch erst ab einer gewissen Geschwindigkeit zuverlässige Signale liefern können, beispielsweise ab ca. 2 km/h, kann diese Nachverfolgung der Anhängerendkante nur bei Vorwärtsfahrt mit höheren Geschwindigkeiten eingesetzt werden. Für Rangiervorgänge in Rückwärtsfahrt und bei kleinen Geschwindigkeiten können diese Sensoren nicht verwendet werden, um eine Anhängerendkante hinreichend genau für eine Nachverfolgung der Anhängerendkante in einem Monitorbild zu detektieren.

Aufgabe der Erfindung ist es obiges Problem zu lösen und auch für Rangiervorgänge in Rückwärtsfahrt und bei kleinen Geschwindigkeiten die Position des Anhängerendes hinreichend genau für eine Nachverfolgung in einem Monitorbild zu detektieren, unabhängig von Anhängertyp und von Informationen, die beispielsweise von verbauten Sensoren erfasst wird. Obige Aufgabe wird durch ein Verfahren mit den Merkmalen des Anspruchs 1 sowie durch ein System mit den Merkmalen des Anspruchs 13 gelöst. Vorteilhafte Weiterentwicklungen der Erfindung sind in den Unteransprüchen angegeben.

Das erfindungsgemäße Verfahren zum Bestimmen der Position eines Anhängerendes bzw. einer Anhängerendkante eines sich von einer Zugeinheit eines Fahrzeugs nach hinten erstreckenden schwenkbaren Anhängers verarbeitet zeitlich aufeinander folgende durch einen Bildsensor eines kamerabasiertes Systems erfasste Kamerabilder. Die für die Verarbeitung verwendeten Kamerabilder müssen dabei nicht direkt aufeinanderfolgend erfasst worden sein, so kann beispielsweise nur jedes zweite oder dritte Kamerabild für die weitere Verarbeitung verwendet werden, wodurch das zu verarbeitende Bilddatenvolumen reduziert werden kann. Vor einer Verarbeitung der erfassten Kamerabilder können diese beispielsweise geeignet bearbeitet werden, beispielsweise hinsichtlich ihrer Auflösung, ihres Kontrasts und/oder Farbinformation. Rohdaten der erfassten Kamerabilder können verwendet oder teilweise bearbeitet bearbeitete Kamerabilder können von dem erfindungsgemäßen Verfahren verwendet werden.

Bei der weiteren Verarbeitung der zeitlich aufeinander folgenden Kamerabilder bestimmt das erfindungsgemäße Verfahren in jedem der Kamerabilder sogenannte Featurepunkte basierend auf einem oder mehreren Bildparametern, mindestens einer Berechnungsgröße von einer oder mehreren Bildparametern und/oder derer Gradienten, wobei ein Featurepunkt mindestens einem Pixel in dem Kamerabild entspricht. Ein Pixel in dem Kamerabild kann dabei als Featurepunkt bestimmt werden, wenn sich beispielsweise ein Wert eines Bildparameters dieses Pixels von einem Wert eines entsprechenden Bildparameters von einem oder von mehreren benachbarten Pixeln um ein festgelegtes Ausmaß unterscheidet.

Beispielsweise können auch mehrere benachbarte Pixel, die ein Pixelcluster bilden, mit einem angrenzenden bzw. benachbarten Pixelcluster hinsichtlich mindestens eines Bildparameters verglichen werden, um einen Featurepunkt zu bestimmen. Die Pixel bzw. Pixelcluster müssen auch nicht direkt nebeneinander liegen, eine räumliche Nähe zueinander kann dabei ausreichend sein.

Das erfindungsgemäße Verfahren wählt dann aus den bestimmten Featurepunkten eine Mehrzahl von Pfadelementen aus, basierend auf einer Positionsverschiebung zwischen der Mehrzahl von Featurepunkten in einem Kamerabild und einer entsprechenden Mehrzahl von Featurepunkten in einem zeitlich nachfolgenden Kamerabild. Das Bestimmen der Pfadelemente erfolgt dabei beispielsweise entlang einer vorbestimmten Richtung, die sich entlang des Anhängers in Richtung Anhängerende erstreckt und vorzugsweise durch die Dichte und/oder Lage der Featurepunkte bestimmt sein kann. Die vorbestimmte Richtung kann dabei fest vorgegeben oder vorzugsweise während des Verfahrens dynamisch angepasst werden. Ein dynamisches Anpassen kann dabei auf bereits festgelegten Pfadelementen basieren. Basierend auf diesen Pfadelementen erzeugt das erfindungsgemäße Verfahren dann mindestens einen sogenannten Wegpfad, der den Anhängerverlauf beschreibt, und bestimmt eine Position auf diesem mindestens einem Wegpfad als Position der Anhängerendkante. Die bestimmten Pfadelemente bzw. Featurepunkte haben relevante x-, y-, dx-, dy-Koordinaten, wobei die dx- und dy-Koordinaten eine Positionsverschiebung in x- bzw. y- Richtung angeben.

Gemäß einer vorteilhaften Ausgestaltung des erfindungsgemäßen Verfahrens werden die Featurepunkte gewichtet, bevor die Pfadelemente ausgewählt werden. Eine derartige Gewichtung kann beispielsweise auf einem Kontrastunterschied zwischen Pixeln bzw. Pixelclustern und benachbarten bzw. in räumlicher Nähe liegenden Pixeln bzw. Pixelclustern basieren. Einer oder mehrere bekannte Bildparameter können als Grundlage für das Gewichten dienen. Ferner kann auch die Positionsverschiebung (dx, dy) zwischen einem Featurepunkt in einem Kamerabild und dem entsprechenden Featurepunkt in einem nachfolgenden Kamerabild als alternative oder weitere Gewichtungsgrundlage verwendet werden.

Gemäß einer weiteren vorteilhaften Ausgestaltung des erfindungsgemäßen Verfahrens werden die Pfadelemente gewichtet und der Wegpfad basierend auf den gewichteten Pfadelementen erzeugt.

Gemäß einer weiteren vorteilhaften Ausgestaltung des erfindungsgemäßen Verfahrens kann das oben genannte Auswählen der Pfadelemente, das Gewichten der Featurepunkte und/oder das Gewichten der Pfadelemente auf einem Knickwinkel bzw. einer Information über eine relativen Positionsbeziehung zwischen der Zugeinheit und dem Anhänger basieren und/oder auf einer Fahrzeuggeschwindigkeit. Ein solcher Knickwinkel bzw. eine relative Positionsbeziehung kann unabhängig von den erfassten Kamerabildern bestimmt werden, z.B. mittels eines am Fahrzeug angebrachten Knickwinkelsensors, oder er kann durch die Daten von einem Lenkwinkelsensor abgeschätzt werden. Alternativ kann er durch Bildanalyse abgeschätzt werden. Andere von im Fahrzeug verbaute Sensoren erfasste Signale über den Fahrzustand können ebenfalls zusätzlich oder alternativ berücksichtigt werden.

Gemäß einer weiteren vorteilhaften Ausgestaltung des erfindungsgemäßen Verfahrens ist der mindestens eine Wegpfad eine durch die Pfadelemente und/oder gewichtete Pfadelemente festgelegte mathematische Funktion, vorzugsweise ein Polynom n-ter Ordnung, beispielsweise eine Gerade, von der die Pfadelemente im Mittel im Wesentlichen gleich beabstandet sind.

Gemäß einer vorteilhaften Ausgestaltung des Verfahrens ist der Bildparameter beispielsweise mindestens einer von einem Helligkeitswert, Farbwert, Grauton oder Gradienten dieser Werte, wobei vor einer Bestimmung der Featurepunkte in einem Kamerabild dieses Kamerabild unbearbeitet bleibt oder geeignet bearbeitet wird, um beispielsweise einen Kontrastunterschied, Helligkeitsunterschied, etc. noch deutlicher sichtbar zu machen. Andere hier nicht explizit aufgeführten Bildparameter sind ebenfalls denkbar.

Gemäß einer weiteren vorteilhaften Ausgestaltung des erfindungsgemäßen Verfahrens kann das zuletzt gefundene Pfadelement als Initialisierungspunkt verwendet werden und weitere Featurepunkte können entlang des Wegpfades ausgewählt werden, die innerhalb eines vorbestimmten Abstands von dem Pfadweg liegen. Eine Projektion des dadurch zuletzt gefundenen Featurepunkts auf den Pfadweg kann dann die Position der Anhängerendkante angeben. Dadurch kann die tatsächliche Position des Anhängerendes weiter angenähert werden. Information über die tatsächlich bestimmte Position des Anhängerendes kann beispielsweise über ein CAN- und/oder Ethernetsystem ausgegeben oder zwischen Softwaremodulen ausgetauscht werden.

Gemäß einer weiteren vorteilhaften Ausgestaltung des erfindungsgemäßen Verfahrens kann die so gefundene Position der Anhängerendkante in zeitlich aufeinander folgenden Kamerabildern derart nachgeführt werden, dass das Anhängerende im Wesentlichen mittig in jedem der zeitlich aufeinander folgenden Kamerabildern erscheint. Somit kann auch bei einem gegebenen Knickwinkel, den ein Anhänger zur Zugmaschine einnimmt, der rückwärtige Verkehr zuverlässiger vom Fahrer des Fahrzeugs wahrgenommen werden.

Gemäß einer weiteren vorteilhaften Ausgestaltung des erfindungsgemäßen Verfahrens können weitere Fahrzeugmerkmale berücksichtigt und zum Korrigieren der bestimmten Position der Anhängerendkante verwendet werden. Diese Fahrzeugmerkmal können beispielsweise geometrische Merkmale wie Länge, Breite, Höhe, etc. umfassen und vorab fest abgespeichert sein für einen bestimmten Typ von Anhänger. Andere Fahrzeugmerkmale, wie beispielsweise die Position einer hinteren Positionsleuchte können für die Korrektur verwenden werden. Diese Information kann von einem anderen Verfahren beispielsweise über ein CAN- oder Ethernetsystem erhalten werden oder durch weitere Softwaremodule zur Verfügung gestellt werden.

Gemäß einer weiteren vorteilhaften Ausgestaltung des erfindungsgemäßen Verfahrens erfolgt eine Verifizierung der bestimmten Position der Anhängerendkante, indem ein Blockraster mit einer Mehrzahl von Zeilen und Spalten, die Zellen definieren, auf mindestens einem Teil des Kamerabilds erzeugt wird. Das Blockraster wird vorzugsweise dort auf dem Bild erzeugt, wo die Position der Anhängerendkante bestimmt worden ist. Durch das Erzeugen des Blockrasters sind die bestimmten Featurepunkte über die Mehrzahl der Zellen des Blockrasters verteilt. Jede Zelle weist also eine Anzahl von Featurepunkten auf. Die Verteilung der Featurepunkte in dem erzeugten Blockraster wird gemäß der Erfindung mit Verteilungen von Featurepunkten einer Mehrzahl von entsprechenden gespeicherten Blockrastern verglichen. Die gespeicherten Blockraster definieren dabei unterschiedliche Verteilungen der Featurepunkte in Verbindung mit einem tatsächlichen Anhängerende. Von den gespeicherten Blockrastern werden zur Verifizierung der bestimmten Position der Anhängerendkante das Blockraster ausgewählt, das am besten mit dem erzeugten Blockraster korreliert, und durch Vergleichen der bestimmten Position des Anhängerendes mit der tatsächlichen Position des Anhängerendes, die in dem ausgewählten Blockraster definiert ist, kann eine Plausibilitätsprüfung durchgeführt werden. Gegebenenfalls kann die bestimmte Position des Anhängerendes basierend auf dieser Plausibilitätsprüfung bei zu starker Abweichung von der tatsächlichen Position korrigiert werden, oder es kann die Position des Anhängerendes erneut durchgeführt werden.

Gemäß einer weiteren vorteilhaften Ausgestaltung des erfindungsgemäßen Verfahrens können Verteilungen der Featurepunkte zusammen mit der entsprechenden Position des Anhängerendes in einem Blockraster vorab gespeichert sein, oder in Echtzeit zu fest definierten oder dynamisch einstellbaren zeitlichen Abständen erzeugt und gespeichert werden. Die ermittelte Verteilung wird dann mit solchen vorab bestimmten Verteilungen verglichen und damit die Position des Anhängerendes verifiziert.

Gemäß einer weiteren vorteilhaften Ausgestaltung des erfindungsgemäßen Verfahrens hängen die unterschiedlichen Verteilungen der Featurepunkte mit den entsprechenden Anhängerende in den gespeicherten Blockraster von dem Knickwinkel zwischen Anhänger und Zugeinheit ab. Information über den Knickwinkel kann beispielsweise in Verbindung mit jedem Blockraster abgespeichert werden. Dadurch kann beispielsweise bei Kenntnis des aktuellen Knickwinkels oder der relativen Positionsbeziehung zwischen Anhänger und Zugeinheit direkt das gespeicherte Blockraster für diesen Knickwinkel gefunden und die Verifikation der Position des bestimmten Anhängerendes durchgeführt werden. Eine andere die Lage des Anhängers relativ zu der Zugeinheit angebende Information kann verwendet werden.

Das erfindungsgemäße kamerabasiertes System enthält mindestens eine an der Zugeinheit vorgesehene Kamera mit einem Bildsensor zum Aufnehmen von zeitlich aufeinander folgenden Kamerabildern eines seitlichen Bereichs des Anhängers, einen Monitor, zur Anzeige eines von der Kamera aufgenommenen Kamerabilds, und wenigstens einen Prozessor, der konfiguriert ist zur Durchführung des oben beschriebenen erfindungsgemäßen Verfahrens. Das erfindungsgemäße kamerabasiertes System ist gemäß einer vorteilhaften Weiterbildung gemäß UN ECE R46 zugelassenes Spiegelersatzsystem, vorzugsweise für Nutzfahrzeuge.

### Aspekte der Erfindung

1. Verfahren zum Bestimmen der Position eines Anhängerendes in einem Kamerabild (6) eines sich von einer Zugeinheit (4) eines Fahrzeugs nach hinten erstreckenden schwenkbaren Anhängers (5) durch Verarbeiten von zeitlich aufeinander folgenden Kamerabildern (6), mit den Schritten:
   Erfassen der zeitlich aufeinanderfolgenden Kamerabilder (6) durch mindestens einen Bildsensor von mindestens einer Bildaufnahmevorrichtung (2)
   Bestimmen einer Mehrzahl von Featurepunkten (8) in jedem für das Verfahren herangezogenen Kamerabilder (6) basierend auf mindestens einem Bildparameter, wobei ein Featurepunkt (8) mindestens einem Pixel in dem Kamerabild (6) entspricht;
   Bestimmen mindestens eines Pfadelements (10) unter Verwendung der Mehrzahl von Featurepunkten (8) entlang einer vorbestimmten Richtung in relevanten Koordinaten x und/oder y und/oder dx und/oder dy basierend auf einer ermittelten Positionsverschiebung in entsprechenden Koordinaten x und/oder y und/oder dx und/oder dy zwischen der Mehrzahl von Featurepunkten (8) in mindestens einem Kamerabild (6) und einer entsprechenden Mehrzahl von Featurepunkten (8) in mindestens einem zeitlich nachfolgenden Kamerabild (6);
   Erzeugen von mindestens einem die Lage des Anhängers (5) beschreibenden Wegpfad (11) entlang der vorbestimmten Richtung basierend auf den Pfadelementen (10); und
   Bestimmen einer Position auf dem Wegpfad (11) als das Anhängerende.
2. Verfahren nach Aspekt 1, bei dem die vorbestimmte Richtung durch die Dichte und Lage der Featurepunkte (8) bestimmt ist.
3. Verfahren nach Aspekt 1, weiter enthaltend die Schritte:
   Gewichten der Featurepunkte (8); und
   Bestimmen der Pfadelemente (10) aus den gewichteten Featurepunkten (8).
4. Verfahren nach einem der Aspekte 1 bis 3, weiter enthaltend die Schritte:
   Gewichten der Pfadelemente (10); und
   Erzeugen des mindestens einen Wegpfads (11) basierend auf den gewichteten Pfadelementen (10).
5. Verfahren nach einem der Aspekte 1 bis 4, weiter enthaltend den Schritt des
   Erfassen einer Information über die relative Positionsbeziehung zwischen dem Anhänger (5) und der Zugeinheit (4) des Fahrzeugs, wobei das Bestimmen der Pfadelemente, das Gewichten der Featurepunkte (8) und/oder das Gewichten der Pfadelemente (10) auf der erhaltenen Information über die relative Positionsbeziehung zwischen dem Anhänger (5) und der Zugeinheit (4) des Fahrzeugs basiert.
6. Verfahren nach einem der vorangegangenen Aspekte, bei dem der mindestens eine Wegpfad (11) als eine durch die Pfadelemente (10) oder gewichtete Pfadelemente (10) bestimmte mathematische Funktion erzeugt wird.
7. Verfahren nach einem der vorangegangenen Aspekte, bei dem der mindestens eine Bildparameter mindestens einer ist von einem Helligkeitswert, Farbwert, Grauton, Kontrastwert und/oder einer Berechnungsgröße aus einem dieser Werte und/oder deren Gradienten eines Pixels und/oder Pixelclusters in einem Kamerabild (6).
8. Verfahren nach einem der vorangegangenen Aspekte, ferner mit
   Festlegen eines Initialisierungspunkts (IP), der auf dem erzeugten Wegpfad (11) liegt, oder mindestens ein dem mindestens einen Wegpfad (11) zugrundeliegendes Pfadelement (10) ist, oder mindestens ein weiterer Featurepunkt (8) ist der einen vorbestimmten Abstand zu dem mindestens einen Wegpfad (11) nicht überschreiten oder eine Berechnungsgröße der Pfadelemente (10) oder der weiteren Featurepunkte (8) ist, als ein Startpunkt; und
   Suchen nach mindestens einem weiteren Featurepunkt (8) ausgehend von dem Startpunkt und entlang des Wegpfads (11), der einen vorbestimmten Abstand zu dem mindestens einen Wegpfad (11) nicht überschreitet; und
   Festlegen einer Koordinate des mindestens einen weiteren gefundenen Featurepunkts (8) und/oder einer Berechnungsgröße der mindestens einen Featurepunkte (8) als die Position (EP) des Anhängerendes.
9. Verfahren nach einem der Aspekte 1 bis 8, ferner mit
   Erfassen von mindestens einem Fahrzeugmerkmal; und
   Korrigieren der bestimmten Position des Anhängerendes basierend auf dem erfassten mindestens einen Fahrzeugmerkmal.
10. Verfahren nach einem der vorangegangenen Aspekte, ferner mit einem Schritt zum Verifizieren der bestimmten Position des Anhängerendes, wobei der Schritt des Verifizierens folgende Schritte aufweist:
   Erzeugen eines Blockrasters (13) auf mindestens einem Teil des Kamerabilds (6), wobei das Blockraster (13) eine Mehrzahl von Zellen (14) definiert, und Bestimmen einer Verteilung der Mehrzahl der Featurepunkte (8) über die Mehrzahl von Zellen (14) des Blockrasters (13) als Bestandteil des erzeugten Blockrasters (13);
   Vergleichen der Verteilung der Featurepunkte (8) in dem erzeugten Blockraster (13) mit Verteilungen von Featurepunkten einer Mehrzahl von entsprechenden gespeicherten Blockrastern, wobei die gespeicherten Blockraster jeweils unterschiedliche Verteilungen von Featurepunkten in Verbindung mit einem tatsächlichen Anhängerende definieren;
   Auswählen von einem der gespeicherten Blockraster basierend auf einer Korrelation zwischen der Verteilung der Featurepunkte (8) in dem erzeugten Blockraster (13) und den Verteilungen der Featurepunkte in den gespeicherten Blockrastern;
   Verifizieren der bestimmten Position des Anhängerendes (12) durch Vergleichen der durch das ausgewählte Blockraster definierten tatsächlichen Position des Anhängerendes mit der bestimmten Position des Anhängerendes (12).
11. Verfahren nach Aspekt 10, ferner mit einem Korrigieren der bestimmten Position des Anhängerendes (12) basierend auf der Verifizierung.
12. Verfahren nach Aspekt 10 oder 11, bei dem die Verteilungen der Featurepunkte und die entsprechenden Anhängerenden in den gespeicherten Blockrastern vorab gespeichert oder in Echtzeit in fest definierten oder dynamisch einstellbaren zeitlichen Abständen erzeugt und gespeichert werden.
13. Verfahren nach einem der Aspekte 10 bis 12, bei dem die Verteilung der Featurepunkte in einem der gespeicherten Blockraster von der Verteilung der Featurepunkte in einem anderen der gespeicherten Blockraster gemäß der Information über die relative Positionsbeziehung zwischen Anhänger (5) und Zugeinheit (4) abweicht.
14. Verfahren nach einem der vorangegangenen Aspekte, mit
   Nachführen der bestimmten Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild mindestens einer Anzeigevorrichtung (1) eines kamerabasierten Systems erscheint.
15. Kamerabasiertes System eines Fahrzeugs mit einer Zugeinheit (5) und einem sich nach hinten erstreckenden schwenkbaren Anhänger (4), enthaltend:
   mindestens eine an der Zugeinheit (5) vorgesehenen Bildaufnahmevorrichtung (2) mit mindestens einem Bildsensor zum Aufnehmen von zeitlich aufeinander folgenden Kamerabildern (6) eines Bereichs des Anhängers (5); und
   mindestens einer Verarbeitungsvorrichtung (3), die konfiguriert ist zur Durchführung des Verfahrens gemäß einem der Aspekte 1 bis 13.
16. Kamerabasiertes System nach Aspekt 15, ferner mit mindestens einer Anzeigevorrichtung (1) zur Anzeige eines von der mindestens einen Bildaufnahmevorrichtung (2) aufgenommenen Kamerabilds (6) und zum Nachführen der bestimmten Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild der Anzeigevorrichtung (1) erscheint.
17. Kamerabasiertes System nach Aspekt 14 oder 15, das gemäß UN ECE R46 zugelassen ist.

### Kurze Beschreibung der Figuren

Nachfolgend wird die Erfindung rein beispielhaft unter Bezugnahme auf die beigefügten Figuren beschrieben, wobei gleiche Bezugszeichen gleiche oder ähnliche Komponenten kennzeichnen. Es zeigen:
- Figur 1: eine schematische Darstellung eines kamerabasierten Systems gemäß einem bevorzugten Ausführungsbeispiel der vorliegenden Erfindung;
- Figur 2a: eine Draufsicht auf ein Fahrzeug, das das in Figur 1 gezeigte kamerabasiertes System verwendet in einer ersten Fahrsituation, die einer geradeaus Fahrt entspricht;
- Figur 2b: eine Draufsicht auf das Fahrzeug, das das in Figur 1 gezeigte kamerabasiertes System verwendet, in einer zweiten Fahrsituation, die einer Kurvenfahrt entspricht;
- Figur 3: ein von dem kamerabasiertes System von Figur 1 aufgenommenes Kamerabild als auf einem Monitor dargestelltes Bild zur Erklärung eines Verfahrens zum Bestimmen einer Position eines Anhängerendes gemäß einem bevorzugten Ausführungsbeispiel der Erfindung;
- Figur 4: das Kamerabild gemäß Figur 3 zur Verdeutlichung der Bestimmung von Featurepunkten gemäß dem bevorzugten Ausführungsbeispiel der Erfindung;
- Figur 5: eine schematische dreidimensionale Darstellung eines Abschnitts des Kamerabilds gemäß Figur 3 zur Verdeutlichung einer Positionsverschiebung der Featurepunkte zwischen zwei aufeinanderfolgenden Kamerabildern gemäß dem bevorzugten Ausführungsbeispiel der Erfindung;
- Figur 6: eine schematische dreidimensionale Darstellung gemäß Figur 5 zur Verdeutlichung der Bestimmung von Pfadelementen gemäß dem bevorzugten Ausführungsbeispiel der Erfindung;
- Figur 7: das Kamerabild gemäß Figur 3 mit überlagerten Pfadelementen entlang einer Anhängerunterkante gemäß dem bevorzugten Ausführungsbeispiel der Erfindung;
- Figur 8: das Kamerabild gemäß Figur 3 mit überlagerten alternativen Pfadelementen entlang des Aufbaus des Anhängers gemäß dem bevorzugten Ausführungsbeispiel;
- Figur 9: das Kamerabild gemäß Figur 7 mit einer symbolischen Darstellung der Bewegung der Featurepunkte und Pfadelemente;
- Figur 10: eine Darstellung zur Verdeutlichung der Bestimmung der Position des Anhängerendes gemäß dem bevorzugten Ausführungsbeispiel der Erfindung;
- Figur 11: das Kamerabild gemäß Figur 9 mit dem durch das bevorzugten Ausführungsbeispiel der Erfindung bestimmten Anhängerende;
- Figur 12: das Kamerabild gemäß Figur 3 mit nachgeführtem Anhängerende gemäß dem bevorzugten Ausführungsbeispiel der Erfindung;
- Figur 13: das Kamerabild gemäß Figur 3 mit einem Blockraster gemäß dem bevorzugten Ausführungsbeispiel der Erfindung:
- Figur 14: eine Zelle des Blockrasters von Figur 13 mit Featurepunkten gemäß dem bevorzugten Ausführungsbeispiel der Erfindung; und
- Figur 15: das Kamerabild gemäß Figur 3 mit nachgeführtem Anhängerende gemäß dem bevorzugten Ausführungsbeispiel der Erfindung.

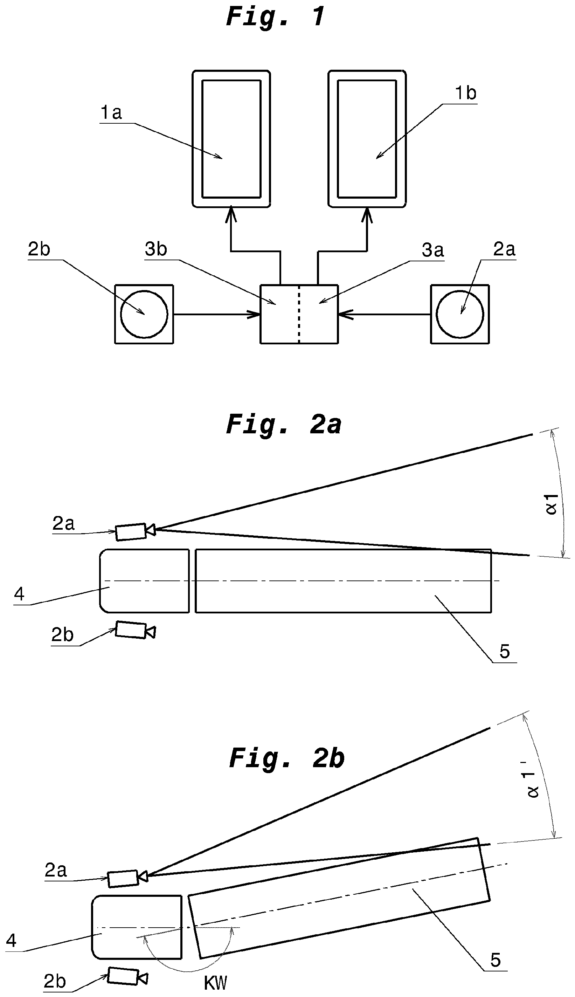

Figur 1 zeigt ein kamerabasiertes System gemäß einer bevorzugten Ausführungsform der Erfindung mit Anzeigevorrichtungen 1a, 1b, Bildaufnahmevorrichtungen 2a, 2b und Verarbeitungsvorrichtungen 3a, 3b.

Die Bildaufnahmevorrichtungen 2a, 2b sind vorzugsweise auf gegenüberliegenden Seites eines Fahrzeugs angeordnet, und über die Verarbeitungsvorrichtungen 3a, 3b jeweils mit den Anzeigevorrichtungen 1a, 1b verbunden. Die Bildaufnahmevorrichtungen 2a, 2b sind auf der gegenüberliegenden Seite des Fahrzeugs angeordnet, wie beispielsweise in Figur 2 gezeigt. Die Verarbeitungsvorrichtungen 3a, 3b weisen gemäß der bevorzugten Ausführungsform eine nicht näher gezeigte Knickwinkelbestimmungsvorrichtung und eine Bilddatenbearbeitungsvorrichtung auf und sind insbesondere in der Lage, das später beschriebene erfindungsgemäße Verfahren zum Bestimmen der Position eines Anhängerendes durchzuführen, das Anhängerende auf den Anzeigevorrichtungen 1a, 1b nachzuführen und zu korrigieren.

Der Einfachheit halber werden im Folgenden nur die Anzeigevorrichtung 1a, die Bildaufnahmevorrichtungen 2a sowie die Verarbeitungsvorrichtung 3a beschrieben. Die Ausführungen gelten jedoch analog für die Anzeigevorrichtung 1b, die Bildaufnahmevorrichtungen 2b sowie die Verarbeitungsvorrichtung 3b auf der gegenüberliegenden Seite des Fahrzeugs. Ferner kann gemäß der bevorzugten Ausführungsform nur eine Verarbeitungsvorrichtung vorgesehen werden, die die Funktion der Verarbeitungsvorrichtungen 3a und 3b übernimmt.

Wie in den Figuren 2a und 2b gezeigt, weist das Fahrzeug beispielsweise ein Zugfahrzeug 4 und einen schwenkbar daran angebrachten Anhänger 5 auf. Die Bildaufnahmevorrichtung 2a deckt mit ihrem Aufnahmebereich beispielsweise einen Sichtbereich bzw. ein Sichtfeld ab, der/das gemäß ECE-R46 einem "Hauptspiegel (groß) Gruppe II" entspricht. Andere geeignete definierte Sichtfelder können entsprechend nationalen Regelungen von der Bildaufnahmevorrichtung 2a abgedeckt werden.

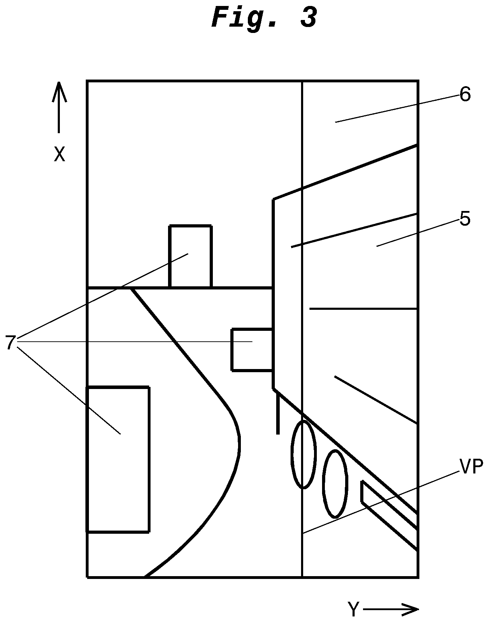

Figur 2a zeigt das Fahrzeug in geradeaus Fahrt ohne einem Knickwinkel zwischen dem Zugfahrzeug 4 und dem Anhänger 5. Bei einer Kurvenfahrt, wie in Figur 2b gezeigt, bildet sich ein Knickwinkel zwischen dem Zugfahrzeug 4 und dem Anhänger 5 und ein hinteres Ende des Anhängers 5 verschiebt sich mit zunehmenden Knickwinkel in das Sichtfeld der Bildaufnahmevorrichtung 2a. Figur 3 zeigt ein von der Bildaufnahmevorrichtung 2a aufgenommenes Kamerabild 6 auf einem Monitor (Monitorbild), bei dem das Ende des Anhängers 5 mit zunehmendem Knickwinkel den rückwärtigen Verkehr verdeckt. Die Bildaufnahmevorrichtung 2 ist in der Lage eine Reihe von zeitlich nachfolgenden Bildern aufzunehmen.

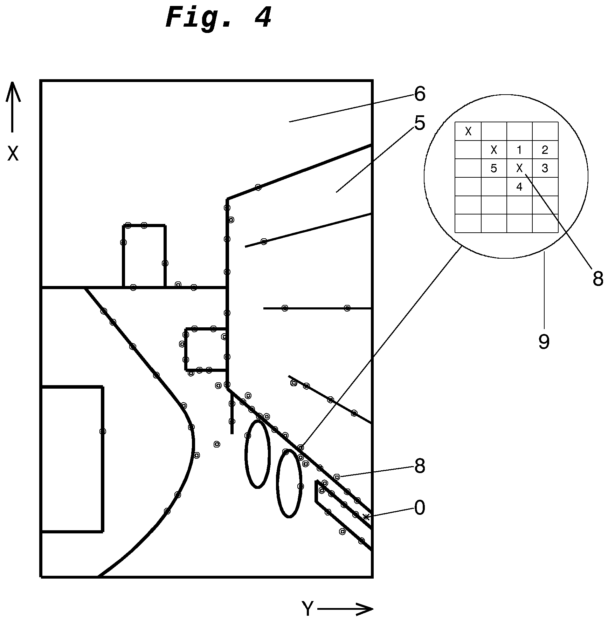

Figur 3 zeigt ein von dem kamerabasiertes System von Figur 1 aufgenommenes Kamerabild 6 als auf einem Monitor dargestelltes Bild des Anhängers 5 mit rückwärtigem Verkehr 7. Figur 4 dient zur Veranschaulichung der Bestimmung von Featurepunkten (8) in diesem Kamerabild 6.

Gemäß einer bevorzugten Ausführungsform des erfindungsgemäßen Verfahrens zum Bestimmen des Anhängerendes bzw. der Anhängerendkante in dem Kamerabild 6 werden in dem zweidimensionalen Kamerabild 6 mit den Koordinatenachsen x und y eine Mehrzahl von Featurepunkten 8 bestimmt, wie in Figur 4 gezeigt. Die Featurepunkte 8 entsprechen jeweils einem einzelnen Pixel oder mehrere Pixel einem Pixelcluster. Figur 4 verdeutlicht in der vergrößerten Darstellung eines Teilausschnitts des Kamerabilds 6 ein Pixelfeld 9. Gemäß der bevorzugten Ausführungsform wird beispielsweise ein Pixel, das die Nachbarpixel 1 bis 5 aufweist, als Featurepunkt bestimmt, wenn ein vorbestimmter Kontrastunterschied mindestens zu einem Teil der Nachbarpixel vorliegt. Andere Bildparameter zur Bestimmung, ob ein Pixel ein Featurepunkt ist, oder nicht, können alternativ oder kumulativ verwendet werden.

Gemäß der bevorzugten Ausführungsform des erfindungsgemäßen Verfahrens werden die in Figur 4 bestimmten Featurepunkte 8 gewichtet, um einen Kontrastunterschied zwischen benachbarten oder in räumlicher Nähe liegenden Pixeln zu betonen bzw. besser zu ermitteln. Ein Gewichtungsparameter kann zum Beispiel die Geschwindigkeit sein, mit der sich Featurepunkte relativ zur Zugmaschine, d.h. in ihrer Position auf dem Bildsensor verändern: keine oder nur kleine Veränderungen können höher gewichtet werden, da bei ihnen anzunehmen ist, dass es sich um mit dem Fahrzeug mitbewegte und damit z.B. auf dem Anhänger befindliche Punkte handelt. Für die weitere Verarbeitung in dem erfindungsgemäßen Verfahren werden dann beispielsweise nur noch Featurepunkte mit oder ab einer bestimmten Gewichtung verwendet, so das nicht alle Featurepunkte verwendet werden müssen, wodurch Rechenkapazität eingespart werden kann.

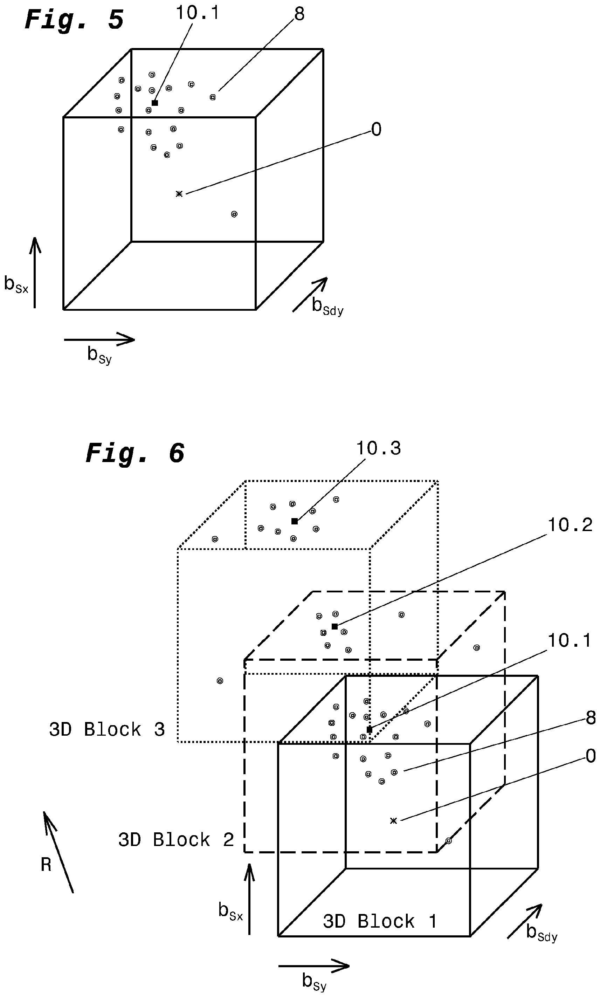

Gemäß der bevorzugten Ausführungsform des erfindungsgemäßen Verfahrens werden aus den in Figur 4 gezeigten Featurepunkten 8 Pfadelemente 10 ausgewählt, wie unter Bezugnahme auf die Figuren 5 und 6 nachfolgend beschrieben wird.

Gemäß der bevorzugten Ausführungsform des erfindungsgemäßen Verfahrens wird zunächst ein Startpunkt 0 in dem Kamerabild 6 festgelegt, wie in Figur 4 gezeigt. Der Startpunkt 0 kann, muss aber kein Featurepunkt 8 sein. Der Startpunkt 0 kann beispielsweise basierend auf dem Knickwinkel und der sich daraus ergebenden Lage des Anhängers relativ zu der Bildaufnahmeeinheit festgelegt werden. Wie in Figur 5 gezeigt, wird ausgehend von dem Startpunkt 0 ein Bildabschnitt definiert, der zur besseren Veranschaulichung in den Figuren 5 und 6 als dreidimensionaler Block mit einer festen oder dynamisch anpassbaren Blockgröße (bs) dargestellt ist. Innerhalb dieses 3D Blocks befinden sich eine entsprechende Mehrzahl der Featurepunkte 8 von Figur 4, die in einem dreidimensionalen Raum um den Startpunkt 0 als Mittelpunkt des Blocks der Größe (bs) herum verteilt sind. Jeder dieser Featurepunkte ist gekennzeichnet durch eine x-Koordinate (bsₓ), eine y-Koordinate (bs_{y}), eine dx-Koordinate (nicht in Figur 5 dargestellt) und eine dy-Koordinate (bs_{dy}). Die dx-Koordinate und die dy-Koordinate stellen dabei eine Positionsverschiebung eines Featurepunkts zwischen zeitlich aufeinanderfolgend aufgenommenen Kamerabildern dar.

Aus der in Figur 5 gezeigten "Featurepunktwolke" wird mindestens ein Pfadelement 10.1 bestimmt. Dieses Pfadelement entspricht gemäß der bevorzugten Ausführungsform des erfindungsgemäßen Verfahrens einem Schwerpunkt der "Featurepunktwolke". Das Pfadelement 10.1 kann also einer der Featurepunkte der "Featurepunktwolke" sein, oder lediglich dort liegen, wo sich die meisten Featurepunkte in dem Block räumlich befinden. Es muss also selbst kein Featurepunkt (8) sein.

Wie in Figur 6 gezeigt, um ein nächstes Pfadelement 10.2 auszuwählen, wird ausgehend von dem Pfadelement 10.1 als neuer Startpunkt ein neuer Bildabschnitt bzw. 3D Block definiert, der die gleiche oder eine andere Blockgröße haben kann, wie der Ausgangsblock, beispielsweise in Abhängigkeit von den in diesem Bereich vorhandenen Featurepunkten. Das Auswählen des Pfadelements 10.2 erfolgt in ähnlicher Weise wie das Pfadelement 10.1. In dieser Weise werden entlang einer Vorzugsrichtung R die Pfadelemente 10 aus den Featurepunkten ermittelt. Gemäß der bevorzugten Ausführungsform des erfindungsgemäßen Verfahrens wird die Vorzugrichtung R durch die Dichte und Lage der Featurepunkte bestimmt und kann entweder fest vorgegeben sein oder sich im Laufe des Verfahrens dynamisch anpassen.

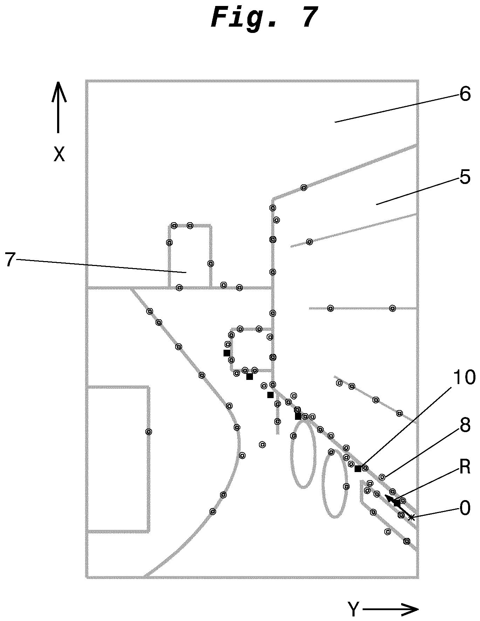

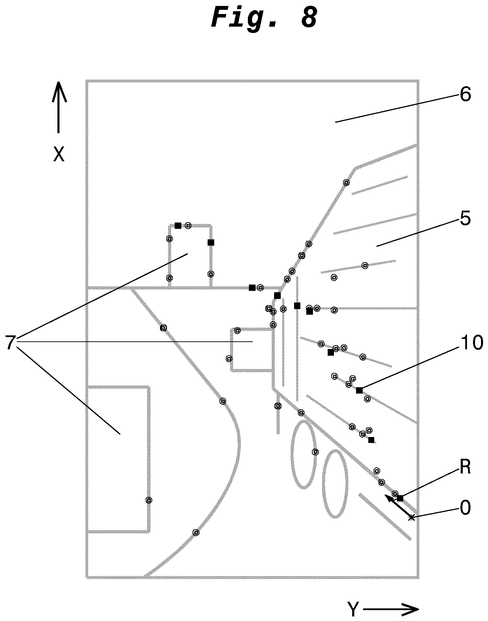

Figur 7 zeigt zur Veranschaulichung die gemäß der bevorzugten Ausführungsform des erfindungsgemäßen Verfahrens ermittelten Pfadelemente 10 auf ein Kamerabild 6 überlagert zusammen mit den Featurepunkten 8. Gemäß Figur 7 erstrecken sich die Pfadelemente 10 entlang der Vorzugsrichtung R am unteren Rand des Anhängers 5. Je nach Aufbau des Anhängers 5 und der damit verschiedenen Verteilung der Featurepunkte bzw. Pfadelemente, können sich die Pfadelemente10 beispielsweise wie in Figur 8 gezeigt erstrecken, also nicht entlang der Unterkante des Anhängers 5. In beiden Fällen kann gemäß der bevorzugten Ausführungsform des erfindungsgemäßen Verfahrens eine Position des Anhängerendes bzw. der Anhängerendkante bestimmt werden, wie nachfolgend weiter ausgeführt wird.

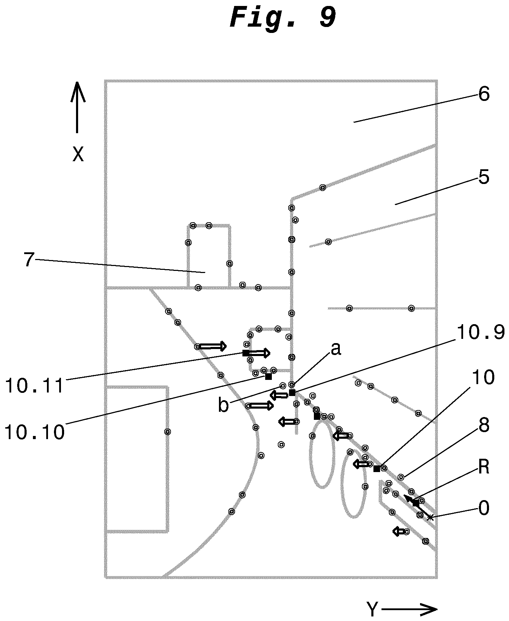

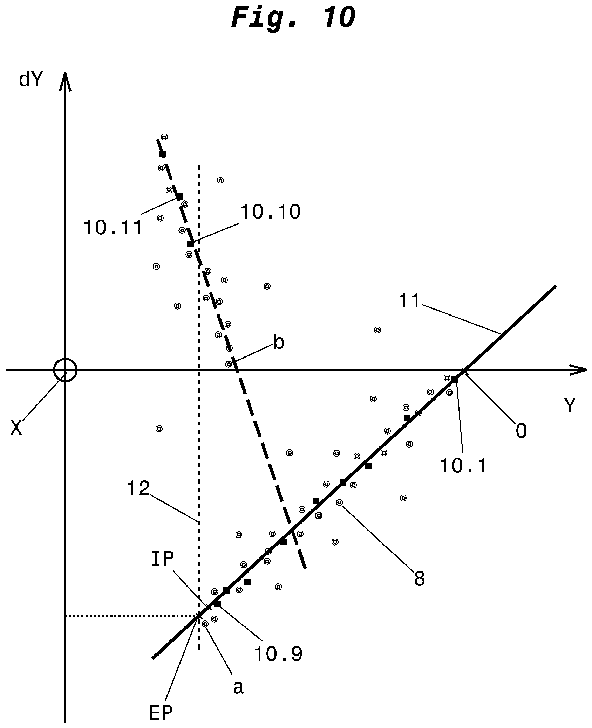

Figur 9 zeigt eine symbolische Darstellung der Bewegung der ermittelten Pfadelemente 10₁ bis 10₁₁ bzw. der Featurepunkte 8 in dem Kamerabild 6 zur besseren Veranschaulichung der Bestimmung des Wegpfads bzw. des Anhängerendes. Hierzu sind zum besseren Verständnis die Pfadelemente 10.1 bis 10.11 und die Featurepunkte 8 von Figur 9 auf ein Koordinatensystem von Figur 10 projiziert. Figur 10 zeigt die Koordinatenachsen y, x (aus der Ebene heraus) und dy.

Gemäß der bevorzugten Ausführungsform des erfindungsgemäßen Verfahrens wird basierend auf den Pfadelementen ein Wegpfad 11 erzeugt, der in dieser bevorzugten Ausführungsform eine Gerade ist. Der Wegpfad 11 kann auch als ein Polynom n-ten Grades erzeugt werden, ebenso können mehrere unterschiedliche Wegpfade mit unterschiedlichen Graden der Polynome erzeugt werden. Bevor der Wegpfad 11 erzeugt wird, können die Pfadelemente 10 zumindest teilweise gewichtet werden basierend auf einer Lage oder Reihenfolge. Es kann eine Metrik mit Gewichtungen der Pfadelemente herangezogen werden, wobei zur Gewichtung die Koordinaten der Pfadelemente und/oder Eigenschaften der Menge der Featurepunkte, die sie repräsentieren, herangezogen werden können, beispielsweise wie viele Featurepunkte, Streuung ihrer Koordinatenwerte, Streuung der "Score-Werte", also der Eigenschaften, die Featurepunkten zu Featurepunkten machen.

Wie in Figur 10 gezeigt liegen die Pfadelemente 10.1 bis 10.9 alle innerhalb eines vorbestimmten Abstands zu dem Wegpfad 11. Die ermittelten Pfadelemente 10.10 und 10.11, die nicht zu dem Anhänger 5 gehören, sondern zu einer Bordsteinkante, wie in Figur 9 gezeigt, liegen außerhalb des vorbestimmten Abstands und daher nicht auf dem Wegpfad 11. Wie in Figur 9 und in Figur 10 gezeigt bewegen sich diese Pfadelemente 10.10 und 10.11 bei Kurvenfahrt schneller als die Pfadelemente 10.1 bis 10.9 und können daher als nicht zum Wegpfad 11 gehörend identifiziert werden.

Gemäß der bevorzugten Ausführungsform des erfindungsgemäßen Verfahrens wird zur Bestimmung der Position des Anhängerendes das letzte Pfadelement 10.9, das bei der Bestimmung des Wegpfad 11 berücksichtigt und damit als hinreichend sicher zum Anhänger gehörend identifiziert worden ist, als Initialisierungspunkt verwendet, ausgehend von dem weitere Featurepunkte 8 bezüglich ihrer räumlichen Nähe zu dem Wegpfad 11 analysiert werden. So ist es beispielsweise möglich, dass bei den vorangegangenen Schritten ein Featurepunkt nicht als zu dem Wegpfad 11 gehörend identifiziert worden ist, weil Grenzwerte zu grob eingestellt waren, oder die Bildabschnitte bzw. Blöcke von Figur 6 zur Bestimmung der Pfadelemente in einer anderen Richtung waren. Auf diese Weise wird das erfindungsgemäße Verfahren weiter verfeinert, wobei die Koordinate des letzten gefundenen Featurepunkts, der innerhalb des vorbestimmten Abstands zu dem Wegpfad 11 liegt, das Anhängerende beschreibt. Alternativ kann das Ende des Anhängers auch aus mehreren zuletzt gefundenen Featurepunkten berechnet werden. In den Figuren 9 und 10 ist dies mit EP bzw. a angegeben. Mit anderen Worten wird das Anhängerende als der Ort auf dem Wegpfad bestimmt, an dem sich in Richtung weg von der Zugmaschine betrachtet, am weitesten entfernt von der Zugmaschine der Bildparameter, der zum Auswählen der Featurepunkte bestimmt wird, zum ersten Mal dauerhaft in dieser Richtung ändert (also nicht nur z.B. nach einem kurzen Aussetzen entlang des Wegpfads wieder auftritt). Der Initialisierungspunkt IP kann dabei auf dem Wegpfad liegen, und/oder mindestens ein Pfadelement sein, und/oder mindestens ein Featurepunkt mit einem gegebenen Abstand zu dem Wegpfad sein. Berechnungsgrößen von mehreren Pfadelementen und/oder Featurepunkten können dabei verwendet werden, beispielsweise Mittelwerte, Schwerpunkte, kleinste quadratische Abweichungen, etc.

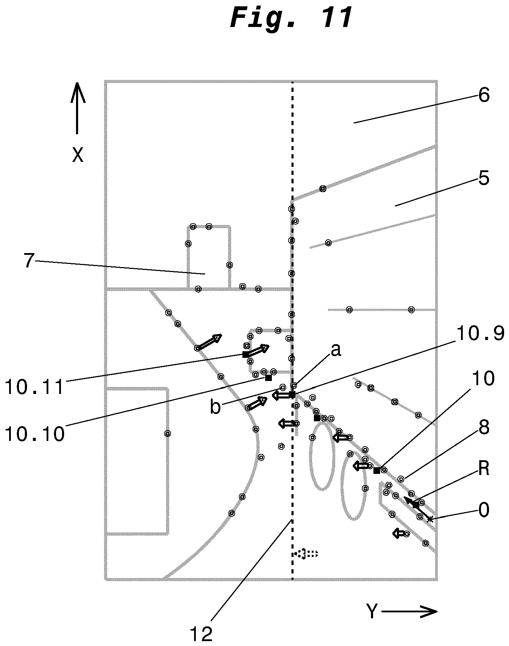

Figur 11 zeigt zur Veranschaulichung eine Projektion einer senkrechten Linie 12 an der Koordinate a des letzten gefundenen Featurepunkts in dem Kamerabild 6, um das durch das erfindungsgemäße Verfahren bestimmte Anhängerende anzugeben.

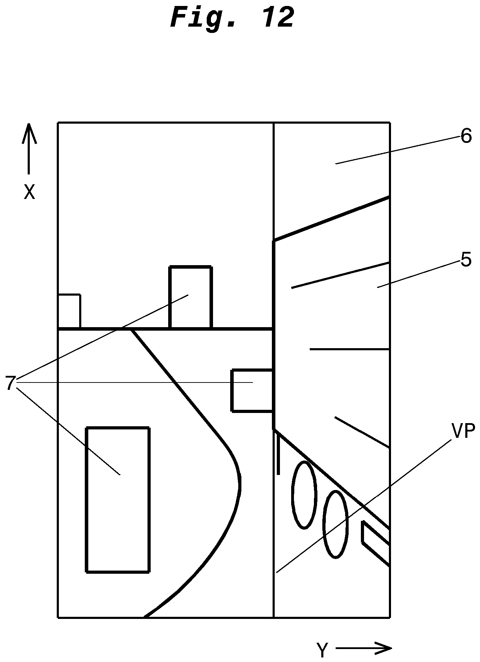

Gemäß der bevorzugten Ausführungsform des erfindungsgemäßen Verfahrens wird die Position des in obiger Weise bestimmten Anhängerendes weiter verwendet, um das Anhängerende bei einer Kurvenfahrt des Fahrzeugs in einem dem Fahrer des Fahrzeugs angezeigten Monitorbild derart nachzuführen, dass es an einer Vorzugsposition in dem Monitorbild erscheint, beispielsweise mittig oder plus minus 0% bis 25% von der Mitte nach links oder rechts verschoben in Figur 12 gezeigt, um so unter anderem auch den rückwärtigen Verkehr zuverlässig im Auge zu behalten.

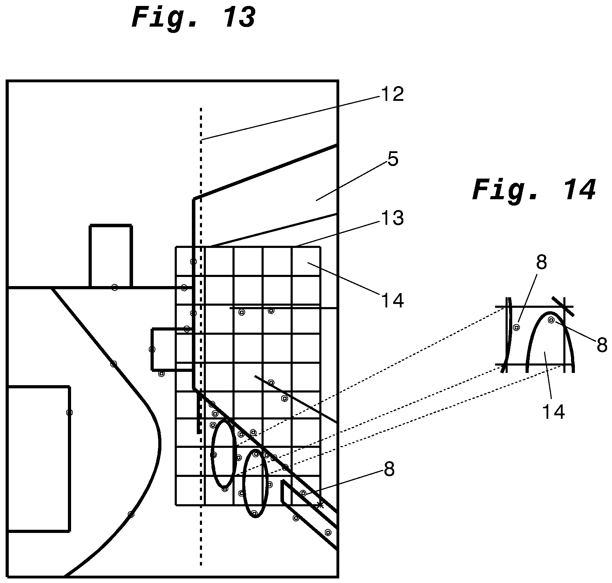

Gemäß der bevorzugten Ausführungsform des erfindungsgemäßen Verfahrens erfolgt weiter eine Verifizierung des in obiger Art und Weise bestimmten Anhängerendes. Hierzu wird ein Blockraster 13 auf einem Teil des Kamerabilds 6 erzeugt, wie in Figur 13 gezeigt. Das Blockraster 13 hat gemäß der bevorzugten Ausführungsform des erfindungsgemäßen Verfahrens eine festgelegte Form und festgelegte Anzahl von Zeilen und Spalten, die eine Mehrzahl von Zellen 14 bilden. Bei dem Blockraster 13 in Figur 13 ist die Anzahl der Spalten ungleich der Anzahl der Zeilen. Grundsätzlich könnte auch eine Rastereinteilung mit anderen als rechteckigen Zellen verwendet werden.

Gemäß der bevorzugten Ausführungsform des erfindungsgemäßen Verfahrens wird eine Verteilung der Mehrzahl von Featurepunkten 8, die in obiger Weise bestimmt werden, über der Mehrzahl von Zellen 14 bestimmt. Die in Figur 14 gezeigte Zelle 14 weist beispielsweise zwei Featurepunkte 8 auf. Die so bestimmte Verteilung der Featurepunkte über die Zellen des erzeugten Blockrasters 13 wird dann mit Verteilungen von Featurepunkten einer Mehrzahl von entsprechenden gespeicherten Blockrastern (nicht gezeigt) verglichen. Die gespeicherten Blockraster definieren jeweils unterschiedliche Verteilungen der Featurepunkte in Verbindung mit einer Position des tatsächlichen Anhängerendes und einem Knickwinkel. Gemäß der bevorzugten Ausführungsform des erfindungsgemäßen Verfahrens wird basierend auf dem Knickwinkel und/oder einer Position des Anhängerendes oder einer Information über die relative Positionsbeziehung zwischen der Zugeinheit und Anhänger und einer Korrelation der Verteilung der Featurepunkte in dem erzeugten Blockraster und in den gespeicherten Blockrastern ein entsprechendes gespeichertes Blockraster ausgewählt, in dem das tatsächliche Anhängerende definiert ist. Durch einen Vergleich dieses tatsächlichen Anhängerendes mit dem (eingegebenen) zuvor bestimmten Anhängerende kann dieses verifiziert und gegebenenfalls verworfen oder korrigiert werden.

Gemäß der bevorzugten Ausführungsform des erfindungsgemäßen Verfahrens kann die Verteilung der Featurepunkte und die entsprechenden Anhängerenden in den gespeicherten Blockraster vorab gespeichert sein oder in Echtzeit bei Durchführung des Verfahrens in fest definierten oder dynamisch gewählten zeitlichen Abständen erzeugt und gespeichert werden.

Durch das Verwenden von gespeicherten Blockrastern, in denen neben der Verteilung der Featurepunkte über die Zellen auch Information über das Anhängerende gespeichert ist, kann darüber hinaus auch ohne das Vorliegen eines zu verifizierenden Anhängerendes das Anhängerende in obiger Weise mittels Vergleichs eines erzeugten Blockrasters mit den gespeicherten Blockrastern ermittelt und zur mittigen Nachführung in einem Kamerabild verwendet werden, wie oben erwähnt.

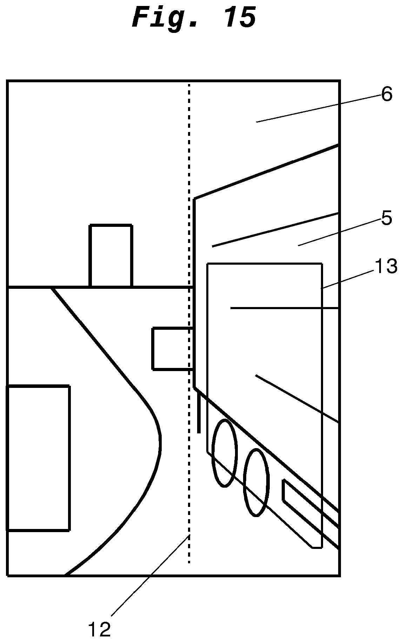

Figur 15 zeigt eine nachgeführte Position des Anhängerendes in einem Kamerabilder 6 an einer Vorzugsposition in einem angezeigten Monitorbild. Die Vorzugsposition ist dabei beispielsweise mittig in dem Monitorbild oder um beispielsweise 0% bis 25% links oder rechts von der Mitte verschoben. Die Vorzugsposition kann beispielsweise auch 0% bis 25% vom linken oder rechten Rand des Monitorbildes versetzt sein.

Es wird explizit betont, dass alle in der Beschreibung und/oder den Ansprüchen offenbarten Merkmale als getrennt und unabhängig voneinander zum Zweck der ursprünglichen Offenbarung ebenso wie um Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 0: Startpunkt
- 1a, 1b: Anzeigevorrichtung
- 2a, 2b: Bildaufnahmevorrichtung
- 3a, 3b: Verarbeitungsvorrichtung
- 4: Zugfahrzeug bzw. Zugeinheit
- 5: Anhänger
- 6: Kamerabild
- 7: rückwärtiger Verkehr
- 8: Featurepunkt
- 9: Pixelfeld
- 10: Pfadelement
- 11: Wegpfad
- 12: Linie, die das Anhängerende angibt
- 13: Blockraster
- 14: Zelle
- R: vorbestimmte Richtung
- IP: Initialisierungspunkt
- VP: Vorzugsposition
- EP: Endpunkt

## Patentansprüche

1. Verfahren zum Bestimmen der Position eines Anhängerendes in einem Kamerabild (6) eines sich von einer Zugeinheit (4) eines Fahrzeugs nach hinten erstreckenden schwenkbaren Anhängers (5) durch Verarbeiten von zeitlich aufeinander folgenden Kamerabildern (6), mit den Schritten:
Erfassen der zeitlich aufeinanderfolgenden Kamerabilder (6) durch mindestens einen Bildsensor von mindestens einer Bildaufnahmevorrichtung (2)
Bestimmen einer Mehrzahl von Featurepunkten (8) in jedem für das Verfahren herangezogenen Kamerabilder (6) basierend auf mindestens einem Bildparameter, wobei ein Featurepunkt (8) mindestens einem Pixel in dem Kamerabild (6) entspricht;
Bestimmen mindestens eines Pfadelements (10) unter Verwendung der Mehrzahl von Featurepunkten (8) entlang einer vorbestimmten Richtung in relevanten Koordinaten x und/oder y und/oder dx und/oder dy basierend auf einer ermittelten Positionsverschiebung in entsprechenden Koordinaten x und/oder y und/oder dx und/oder dy zwischen der Mehrzahl von Featurepunkten (8) in mindestens einem Kamerabild (6) und einer entsprechenden Mehrzahl von Featurepunkten (8) in mindestens einem zeitlich nachfolgenden Kamerabild (6);
Erzeugen von mindestens einem die Lage des Anhängers (5) beschreibenden Wegpfad (11) entlang der vorbestimmten Richtung basierend auf den Pfadelementen (10); und Bestimmen einer Position auf dem Wegpfad (11) als das Anhängerende.

2. Verfahren nach Anspruch 1, bei dem die vorbestimmte Richtung durch die Dichte und Lage der Featurepunkte (8) bestimmt ist, und/oder weiter enthaltend die Schritte:
Gewichten der Featurepunkte (8); und
Bestimmen der Pfadelemente (10) aus den gewichteten Featurepunkten (8).

3. Verfahren nach Anspruch 1 oder 2, weiter enthaltend die Schritte:
Gewichten der Pfadelemente (10); und
Erzeugen des mindestens einen Wegpfads (11) basierend auf den gewichteten Pfadelementen (10).

4. Verfahren nach einem der Ansprüche 1 bis 3, weiter enthaltend den Schritt des
Erfassen einer Information über die relative Positionsbeziehung zwischen dem Anhänger (5) und der Zugeinheit (4) des Fahrzeugs, wobei das Bestimmen der Pfadelemente, das Gewichten der Featurepunkte (8) und/oder das Gewichten der Pfadelemente (10) auf der erhaltenen Information über die relative Positionsbeziehung zwischen dem Anhänger (5) und der Zugeinheit (4) des Fahrzeugs basiert.

5. Verfahren nach einem der vorangegangenen Ansprüche, bei dem der mindestens eine Wegpfad (11) als eine durch die Pfadelemente (10) oder gewichtete Pfadelemente (10) bestimmte mathematische Funktion erzeugt wird, und/oder bei dem
der mindestens eine Bildparameter mindestens einer ist von einem Helligkeitswert, Farbwert, Grauton, Kontrastwert und/oder einer Berechnungsgröße aus einem dieser Werte und/oder deren Gradienten eines Pixels und/oder Pixelclusters in einem Kamerabild (6).

6. Verfahren nach einem der vorangegangenen Ansprüche, ferner mit
Festlegen eines Initialisierungspunkts (IP), der auf dem erzeugten Wegpfad (11) liegt, oder mindestens ein dem mindestens einen Wegpfad (11) zugrundeliegendes Pfadelement (10) ist, oder mindestens ein weiterer Featurepunkt (8) ist der einen vorbestimmten Abstand zu dem mindestens einen Wegpfad (11) nicht überschreiten oder eine Berechnungsgröße der Pfadelemente (10) oder der weiteren Featurepunkte (8) ist, als ein Startpunkt; und
Suchen nach mindestens einem weiteren Featurepunkt (8) ausgehend von dem Startpunkt und entlang des Wegpfads (11), der einen vorbestimmten Abstand zu dem mindestens einen Wegpfad (11) nicht überschreitet; und
Festlegen einer Koordinate des mindestens einen weiteren gefundenen Featurepunkts (8) und/oder einer Berechnungsgröße der mindestens einen Featurepunkte (8) als die Position (EP) des Anhängerendes.

7. Verfahren nach einem der Ansprüche 1 bis 6, ferner mit
Erfassen von mindestens einem Fahrzeugmerkmal; und
Korrigieren der bestimmten Position des Anhängerendes basierend auf dem erfassten mindestens einen Fahrzeugmerkmal.

8. Verfahren nach einem der vorangegangenen Ansprüche, ferner mit einem Schritt zum Verifizieren der bestimmten Position des Anhängerendes, wobei der Schritt des Verifizierens folgende Schritte aufweist:
Erzeugen eines Blockrasters (13) auf mindestens einem Teil des Kamerabilds (6), wobei das Blockraster (13) eine Mehrzahl von Zellen (14) definiert, und Bestimmen einer Verteilung der Mehrzahl der Featurepunkte (8) über die Mehrzahl von Zellen (14) des Blockrasters (13) als Bestandteil des erzeugten Blockrasters (13);
Vergleichen der Verteilung der Featurepunkte (8) in dem erzeugten Blockraster (13) mit Verteilungen von Featurepunkten einer Mehrzahl von entsprechenden gespeicherten Blockrastern, wobei die gespeicherten Blockraster jeweils unterschiedliche Verteilungen von Featurepunkten in Verbindung mit einem tatsächlichen Anhängerende definieren;
Auswählen von einem der gespeicherten Blockraster basierend auf einer Korrelation zwischen der Verteilung der Featurepunkte (8) in dem erzeugten Blockraster (13) und den Verteilungen der Featurepunkte in den gespeicherten Blockrastern;
Verifizieren der bestimmten Position des Anhängerendes (12) durch Vergleichen der durch das ausgewählte Blockraster definierten tatsächlichen Position des Anhängerendes mit der bestimmten Position des Anhängerendes (12).

9. Verfahren nach Anspruch 8, ferner mit einem Korrigieren der bestimmten Position des Anhängerendes (12) basierend auf der Verifizierung.

10. Verfahren nach Anspruch 8 oder 9, bei dem die Verteilungen der Featurepunkte und die entsprechenden Anhängerenden in den gespeicherten Blockrastern vorab gespeichert oder in Echtzeit in fest definierten oder dynamisch einstellbaren zeitlichen Abständen erzeugt und gespeichert werden.

11. Verfahren nach einem der Ansprüche 8 bis 10, bei dem die Verteilung der Featurepunkte in einem der gespeicherten Blockraster von der Verteilung der Featurepunkte in einem anderen der gespeicherten Blockraster gemäß der Information über die relative Positionsbeziehung zwischen Anhänger (5) und Zugeinheit (4) abweicht.

12. Verfahren nach einem der vorangegangenen Ansprüche, mit
Nachführen der bestimmten Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild mindestens einer Anzeigevorrichtung (1) eines kamerabasierten Systems erscheint.

13. Kamerabasiertes System eines Fahrzeugs mit einer Zugeinheit (5) und einem sich nach hinten erstreckenden schwenkbaren Anhänger (4), enthaltend:
mindestens eine an der Zugeinheit (5) vorgesehenen Bildaufnahmevorrichtung (2) mit mindestens einem Bildsensor zum Aufnehmen von zeitlich aufeinander folgenden Kamerabildern (6) eines Bereichs des Anhängers (5); und
mindestens einer Verarbeitungsvorrichtung (3), die konfiguriert ist zur Durchführung des Verfahrens gemäß einem der Ansprüche 1 bis 12.

14. Kamerabasiertes System nach Anspruch 13, ferner mit mindestens einer Anzeigevorrichtung (1) zur Anzeige eines von der mindestens einen Bildaufnahmevorrichtung (2) aufgenommenen Kamerabilds (6) und zum Nachführen der bestimmten Position des Anhängerendes in den zeitlich aufeinander folgenden Kamerabildern (6) in Abhängigkeit von der Lage des Anhängers (5) zu dem die Kamerabilder (6) erfassenden Bildsensor derart, dass das Anhängerende an einer Vorzugsposition in einem Monitorbild der Anzeigevorrichtung (1) erscheint.

15. Kamerabasiertes System nach Anspruch 13 oder 14, das gemäß UN ECE R46 zugelassen ist.
